# EUROPEAN PATENT APPLICATION

(11) **EP 3 018 614 A1**
(43) Date of publication of application: **11.05.2016**
(21) Application number: 15192716.7
(22) Date of filing: 03.11.2015
(51) Int. Cl.: G06K 9/00, B65H 7/12

(54) **IMAGE READING DEVICE AND IMAGE READING METHOD**

(30) Priority: 05.11.2014 JP 2014224910; 30.10.2015 JP 2015214473
(71) Applicant: Funai Electric Co., Ltd., Daito-shi, Osaka 574-0013 (JP)
(72) Inventor: KAMISOYAMA, Shinichi, Daito-shi, Osaka 574-0013 (JP)
(74) Representative: Grünecker Patent- und Rechtsanwälte PartG mbB

(57) **Abstract**

An image reading device (100, 201, 300) is configured (an image reading method includes) to acquire first information having regularity contained in image data read by a reading portion (15) and positional information about the first information, to determine a range based on the first information and the positional information, and to detect a read fault of a medium based on the first information contained in the range.

## Description

### BACKGROUND OF THE INVENTION

### Field of the Invention

The present invention relates to an image reading device and an image reading method, and more particularly, it relates to an image reading device and an image reading method each that detects a read fault of a medium.

### Description of the Background Art

An image reading device and an image reading method that detect a read fault of a medium are known in general, as disclosed in Japanese Patent Laying-Open No. 2010-228351, for example.

The aforementioned Japanese Patent Laying-Open No. 2010-228351 discloses a booklet reading device with a page turning mechanism (hereinafter referred to as the "booklet reading device") including a multi feed detector that detects multi feed of turned pages. This booklet reading device includes a page turning portion, a reader, and the multi feed detector. The page turning portion has a function of turning the pages of a booklet. The reader is configured to read a newly opened page. The multi feed detector includes an ultrasonic sensor and is configured to detect the multi feed of the turned pages (a read fault of a medium) by the ultrasonic sensor when the page turning portion turns the pages of the booklet.

The booklet reading device described in the aforementioned Japanese Patent Laying-Open No. 2010-228351 is provided with the ultrasonic sensor in order to detect the read fault of a manuscript (medium). Thus, the booklet reading device according to the aforementioned Japanese Patent Laying-Open No. 2010-228351 must be provided with the ultrasonic sensor, and hence the structure of the booklet reading device (image reading device) is complicated.

### SUMMARY OF THE INVENTION

The present invention has been proposed in order to solve the aforementioned problem, and an object of the present invention is to provide an image reading device and an image reading method each capable of detecting a read fault of a medium while suppressing complication of the structure of the image reading device.

In order to attain the aforementioned object, an image reading device according to a first aspect of the present invention includes a reading portion configured to read image data of a medium, a storage portion configured to store the image data, and a controller configured to acquire first information having regularity contained in the image data and positional information about the first information, both of which are stored in the storage portion. The controller is configured to determine a range based on the first information and the positional information both acquired from each of two or more pieces of image data and to detect a read fault of the medium based on the first information contained in the range.

As hereinabove described, the image reading device according to the first aspect of the present invention is configured to determine the range based on the first information and the positional information both acquired from each of the two or more pieces of image data and to detect the read fault of the medium based on the first information (page number, for example) contained in the range, whereby no detector configured to detect the read fault of the medium (multi feed, for example), such as an ultrasonic sensor may be provided separately from the reading portion. Therefore, the image reading device can detect the read fault of the medium while suppressing complication of the structure. Furthermore, the image reading device determines the range based on the first information and the positional information both acquired from each of the two or more pieces of image data, and hence a user may not set the range (written page number position range) of the image data. Consequently, the user may not set the written page number position range of the image data, and hence operational convenience for the user can be improved. In addition, the image reading device can more accurately determine the range (written page number position range), as compared with the case where the image reading device determines the range (the written page number position range of the image data) based on the position of a written number in one piece of image data.

In the aforementioned image reading device according to the first aspect, the controller is preferably configured to determine the range based on an overlap of two or more pieces of positional information. The positions of written first information (page numbers) in a common medium (manuscript) are frequently set to prescribed positions (same positions) even in different pages. More specifically, the positions of the written page numbers in the manuscript frequently overlap each other over a plurality of pages. In consideration of this point, according to the present invention, the range is determined based on the overlap of the two or more pieces of positional information, whereby the written page number position range of the image data can be easily set.

In this case, the controller is preferably configured to determine second information based on the reading order of the image data and to detect the read fault of the medium resulting from multi feed of the medium based on the first information and the second information contained in the range. According to this structure, multi feed of the medium (manuscript) can be detected.

In the aforementioned image reading device that detects multi feed, the controller is preferably configured to determine a plurality of ranges corresponding to the number of overlapping positions of the positional information when there are a plurality of overlapping positions. According to this structure, the controller can determine the plurality of ranges when the image reading device reads the medium having a plurality of pages aggregated in one piece of image data. Consequently, even when reading the medium having the plurality of pages aggregated in one piece of image data, the image reading device can detect the read fault of the medium based on the first information and the second information contained in the plurality of ranges.

In the aforementioned image reading device that detects multi feed, the controller is preferably configured to determine an overlapping position with the largest number of acquired pieces of first information of a plurality of overlapping positions of the positional information as the range when there are the plurality of overlapping positions. In a medium, a page number is generally written in an overlapping position with the largest number of pieces of first information of a plurality of overlapping positions. Based on this point, according to the present invention, the controller is configured to determine the overlapping position with the largest number of acquired pieces of first information of the plurality of overlapping positions as the range when there are the plurality of overlapping positions of the positional information, whereby the controller can more accurately determine the range (written page number position range).

In the aforementioned image reading device that detects multi feed, the controller is preferably configured to determine the range within a range having a first width from an end of the image data in a transverse direction and having a second width from an end of the image data in a longitudinal direction. In general, the first information (such as a page number) is frequently written in the range having the first width from the end of the medium in the transverse direction and having the second width from the end of the image data in the longitudinal direction. Based on this point, according to the present invention, the controller is configured to determine the range within the range having the first width from the end of the image data in the transverse direction and having the second width from the end of the image data in the longitudinal direction, whereby the first information and the positional information may not be acquired in a range that is in excess of the first width from the end of the image data in the transverse direction and a range that is in excess of the second width from the end of the image data in the longitudinal direction, and hence a processing load on the controller can be reduced.

In the aforementioned image reading device that detects multi feed, the first information preferably contains one of a number, an alphabet, and a symbol having regularity. According to this structure, the number, the alphabet, or the symbol is detected, whereby the range can be easily determined, and the read fault of the medium can be easily detected.

In the aforementioned image reading device that determines the range based on the overlap of the positional information, the controller is preferably configured to determine the range based on the number of overlaps of the positional information. According to this structure, the written page number position range of the image data can be more effectively determined, as compared with the case where an entire range in which the overlap of the positional information is detected is determined as the range (written page number position range).

In the aforementioned image reading device according to the first aspect, the controller is preferably configured to acquire the first information and the positional information from a previously set margin of the image data. According to this structure, the first information (a number) written in an area other than the margin and the positional information may not be detected, and hence a processing load can be reduced when the first information and the positional information are detected from the image data.

In the aforementioned image reading device according to the first aspect, the controller is preferably configured to display the image data corresponding to the read fault of the medium on a display portion when detecting the read fault of the medium and to display the last page of the image data on the display portion when not detecting the read fault of the medium. According to this structure, the image reading device can allow the user to visually recognize the image data corresponding to the read fault of the medium when detecting the read fault of the medium. Furthermore, the image reading device can allow the user to visually recognize (confirm) the last page of the image data when detecting no read fault of the medium.

In the aforementioned image reading device that detects multi feed, the controller is preferably configured to detect the read fault of the medium based on the first information and the second information of the image data excluding the image data in which the first information is not written when the first information is not written in the range. In a manuscript (medium) such as a common magazine, for example, there is a page(s) containing a page number(s) and a page(s) (such as a picture page(s)) containing no page number. In this case, if the image reading device immediately determines that there is the read fault of the medium when there is the page(s) in which the page number(s) is not written in the range (written page number position range) of the image data, the image reading device erroneously detects that there is the read fault of the medium even when there is no read fault of the medium (even when reading the manuscript without multi feed). On this point, according to the present invention, the image reading device is configured as described above, whereby the image reading device does not detect the read fault of the medium when page numbers before and after the page(s) containing no page number are in the correct order even in the case where there is the page(s) containing no page number, such as the picture page(s). Thus, the possibility of erroneously detecting the read fault of the medium can be significantly reduced.

The aforementioned image reading device that detects multi feed preferably further includes a paper carrying portion configured to carry the medium including a paper to the reading portion, and the controller is preferably configured to determine that there is multi feed during carrying of the medium by the paper carrying portion when detecting the read fault of the medium based on the first information contained in the range. According to this structure, multi feed caused during the carrying of the medium by the paper carrying portion can be detected based on the first information contained in the range.

In the aforementioned image reading device according to the first aspect, the reading portion is preferably configured to read the medium including a manuscript with a plurality of pages as the image data for each page, and the controller is preferably configured to detect the first information including a number and the position of the number that is written from the image data read by the reading portion. According to this structure, in a manuscript, a page number is generally written as information having regularity, and hence the number (page number) is employed as the first information, whereby the read fault of the medium can be easily detected.

In this case, the controller is preferably configured to set the range including a written page number position range of the image data based on the positional information that is the position of the number that is written in each of at least two of the two or more pieces of image data and to detect the read fault of the medium based on the number written in the range.

An image reading method according to a second aspect of the present invention includes reading image data of a medium, storing the image data, acquiring first information having regularity contained in the image data and positional information about the first information, both of which are stored in a storage portion, determining a range based on two or more pieces of first information and two or more pieces of positional information both acquired from each of two or more pieces of image data, and detecting a read fault of the medium based on the first information contained in the range.

As hereinabove described, the image reading method according to the second aspect of the present invention includes determining the range based on the two or more pieces of first information and the two or more pieces of positional information both acquired from each of the two or more pieces of image data and detecting the read fault of the medium based on the first information contained in the range. Thus, also in the image reading method according to the second aspect, the read fault of the medium can be detected while complication of the structure is suppressed.

In the aforementioned image reading method according to the second aspect, determining the range preferably includes determining the range based on an overlap of the two or more pieces of positional information. According to this structure, the range (written page number position range) of the image data can be easily set.

In this case, the image reading method preferably further includes determining second information based on the reading order of the image data, and detecting the read fault of the medium preferably includes detecting the read fault of the medium resulting from multi feed of the medium based on the first information and the second information contained in the range. According to this structure, multi feed of the medium (manuscript) can be detected.

In the aforementioned image reading method including detecting the read fault of the medium resulting from multi feed of the medium, determining the range preferably includes determining a plurality of ranges corresponding to the number of overlapping positions of the positional information when there are a plurality of overlapping positions. According to this structure, the plurality of ranges can be determined when the medium having a plurality of pages aggregated in one piece of image data is read. Consequently, even when the medium having the plurality of pages aggregated in one piece of image data is read, the read fault of the medium can be detected based on the first information and the second information contained in the plurality of ranges.

In the aforementioned image reading method including detecting the read fault of the medium resulting from multi feed of the medium, determining the range preferably includes determining an overlapping position with the largest number of acquired pieces of first information of a plurality of overlapping positions of the positional information as the range when there are the plurality of overlapping positions. In a medium, a page number is generally written in an overlapping position with the largest number of pieces of first information of a plurality of overlapping positions. Based on this point, the image reading method is configured as described above, whereby the range (written page number position range) can be more accurately determined.

In the aforementioned image reading method including detecting the read fault of the medium resulting from multi feed of the medium, determining the range preferably includes determining the range within a range having a first width from an end of the image data in a transverse direction and having a second width from an end of the image data in a longitudinal direction. In general, the first information (such as a page number) is frequently written in the range having the first width from the end of the medium in the transverse direction and having the second width from the end of the image data in the longitudinal direction. Based on this point, the image reading method is configured as described above, whereby the first information and the positional information may not be acquired in a range that is in excess of the first width from the end of the image data in the transverse direction and a range that is in excess of the second width from the end of the image data in the longitudinal direction, and hence a processing load on the controller can be reduced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the overall structure of an image reading device according to a first embodiment of the present invention;
Fig. 2 is a sectional view schematically showing the structure of a scanner according to the first embodiment of the present invention;
Fig. 3 illustrates detection of the positions of written numbers according to the first embodiment of the present invention;
Fig. 4 illustrates detection of overlapping positions according to the first embodiment of the present invention;
Fig. 5 illustrates determination of regularity of read values of numbers in the overlapping positions according to the first embodiment of the present invention;
Fig. 6 is a diagram showing an example of written page number position ranges according to the first embodiment of the present invention;
Fig. 7 is a diagram showing another example of the written page number position ranges according to the first embodiment of the present invention;
Fig. 8 is a diagram for illustrating processing for determining the possibility of multi feed and processing for specifying a multi feed part according to the first embodiment of the present invention;
Fig. 9 is another diagram for illustrating the processing for determining the possibility of multi feed and the processing for specifying the multi feed part according to the first embodiment of the present invention;
Fig. 10 is a diagram for illustrating irregularities according to the first embodiment of the present invention;
Fig. 11 is a diagram for illustrating a multi feed part confirmation screen according to the first embodiment of the present invention;
Fig. 12 is a diagram for illustrating a last page confirmation screen according to the first embodiment of the present invention;
Fig. 13 is a diagram for illustrating the multi feed part confirmation screen in the case where there is a part where multi feed cannot be determined according to the first embodiment of the present invention;
Fig. 14 is a diagram for illustrating the last page confirmation screen in the case where there is the part where multi feed cannot be determined according to the first embodiment of the present invention;
Fig. 15 is a flowchart for illustrating overall processing for determining multi feed according to the first embodiment of the present invention;
Fig. 16 is a flowchart for illustrating processing for setting the written page number position ranges according to the first embodiment of the present invention;
Fig. 17 is a flowchart (1) for illustrating processing for detecting an irregularity according to the first embodiment of the present invention;
Fig. 18 is a flowchart (2) for illustrating the processing for detecting the irregularity according to the first embodiment of the present invention;
Fig. 19 is a block diagram showing the overall structure of a scanner according to a second embodiment of the present invention;
Fig. 20 is a diagram for illustrating setting of a margin according to a third embodiment of the present invention; and
Fig. 21 is a diagram for illustrating another setting of the margin according to the third embodiment of the present invention.

### DESCRIPTION OF THE PREFERRED EMBODIMENTS

Embodiments of the present invention are hereinafter described with reference to the drawings.

### (First Embodiment)

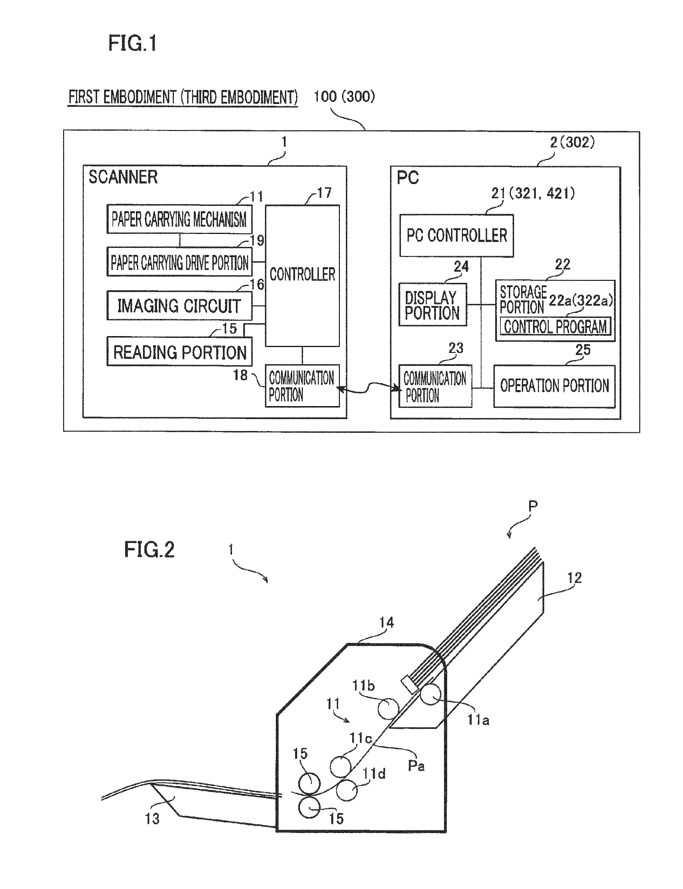

The overall structure of an image reading device 100 according to a first embodiment of the present invention is now described with reference to Figs. 1 to 14. The image reading device 100 according to the first embodiment is configured as a so-called document scanner that reads a manuscript P with a plurality of (three or more, for example) pages as image data D for each page and stores the read image data D by a scanner 1 and a PC (personal computer) 2. The image reading device 100 may be configured as an image reading system including the scanner 1 and the PC 2. The manuscript P is an example of the "medium" in the claims.

As shown in Fig. 1, the image reading device 100 is provided with the scanner 1 and the PC 2. The scanner 1 and the PC 2 are configured to be capable of communication with each other and to be capable of transmitting the image data D, control signals, etc. to each other. The scanner 1 is configured to read the manuscript P with the plurality of pages (the number of pages is N, for example) as the image data D (D1 to DM) for each page and to transmit the image data D to the PC 2. The PC 2 is configured to acquire and store the image data D.

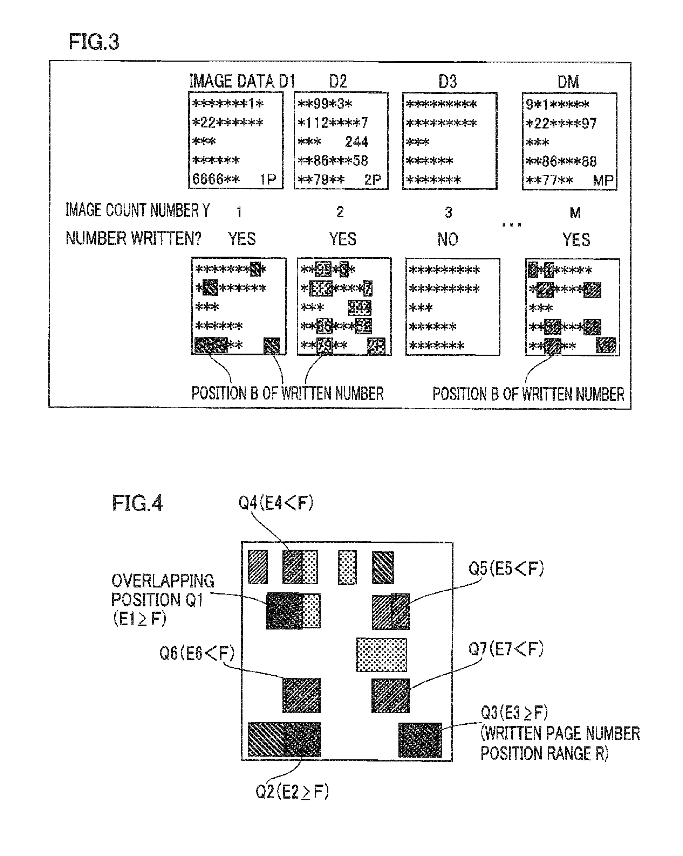

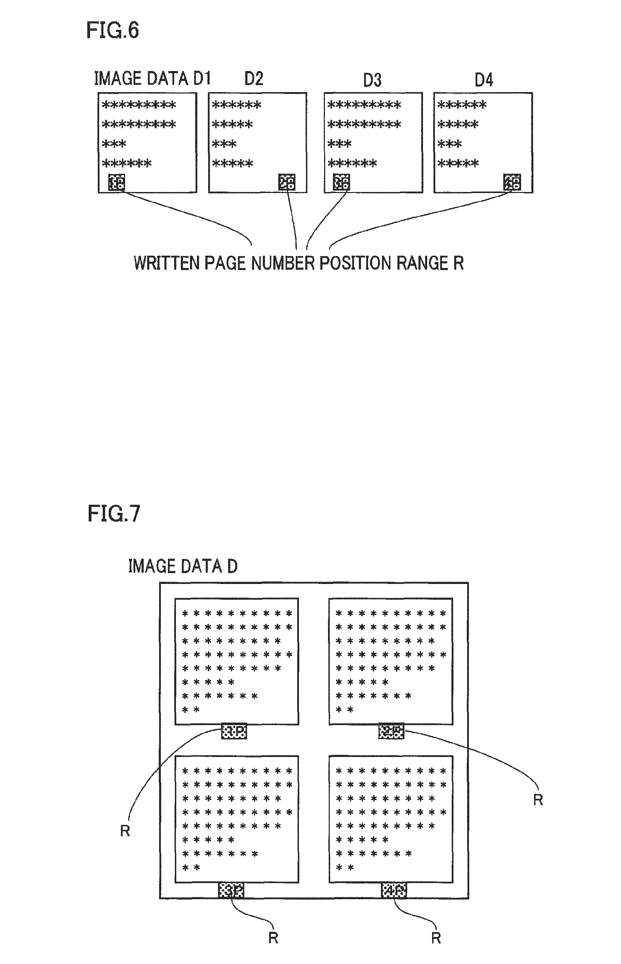

According to the first embodiment, the PC 2 of the image reading device 100 is configured to set written page number position ranges R (see Fig. 3 and Fig. 6) of the image data D on the basis of positional information about the positions B (see Fig. 3) of written numbers in at least two of two or more pieces of image data D and to determine whether or not there is multi feed on the basis of page numbers X, which are numbers written in the written page number position ranges R of the image data D. To determine whether or not there is multi feed is an example of to "detect a read fault of the medium" ("to determine whether or not there is a fault related to the reading order") in the claims. The numbers and the page numbers X are examples of the "first information" in the claims. The written page number position ranges R are examples of the "range" in the claims.

More specifically, according to the first embodiment, the PC 2 of the image reading device 100 is configured to determine the written page number position ranges R on the basis of the numbers and the positions B in the image data D acquired from each of the two or more pieces of image data D and to detect the read fault of the manuscript P on the basis of the numbers (page numbers X) in the image data D contained in the written page number position ranges R.

The structure of the scanner 1 is now described.

As shown in Fig. 2, the scanner 1 is provided with a paper carrying mechanism 11, a paper feed tray 12, and a paper ejection tray 13. The paper carrying mechanism 11 is arranged in a scanner body portion 14 and includes roller portions 11a to 11d. The paper feed tray 12 is configured such that the manuscript P can be arranged thereon and partially protrudes from the scanner body portion 14. The paper ejection tray 13 is configured such that the manuscript P having been read by a reading portion 15 described later is arranged thereon and partially protrudes from the scanner body portion 14. The paper carrying mechanism 11 is an example of the "paper carrying portion" in the claims.

The roller portions 11a to 11d each are configured to carry papers Pa normally one by one from the paper feed tray 12 to the paper ejection tray 13 by rolling while contacting with the papers Pa of the manuscript P. The paper carrying mechanism 11 may infrequently carry two or more papers Pa simultaneously from the paper feed tray 12 to the paper ejection tray 13. In this case, the scanner 1 does not read some pages of the two or more papers Pa as the image data D but carries those papers Pa to the paper ejection tray 13. In this description, simultaneous carrying of two or more papers Pa is described as the "multi feed".

The scanner 1 is provided with the reading portion 15 and an imaging circuit 16. The reading portion 15 includes an image sensor, and the image sensor of the reading portion 15 is configured to read the manuscript P with N pages carried by the paper carrying mechanism 11 as data for each page and to transmit the data to the imaging circuit 16. As shown in Fig. 3, the imaging circuit 16 is configured to generate the data read by the reading portion 15 as the image data D1 to DM. The reading portion 15 may be configured to read both sides of the papers Pa simultaneously as the image data D by providing two image sensors in the reading portion 15 or reversing the papers Pa by the paper carrying mechanism 11. M represents the total number of acquired pieces of image data D.

As shown in Fig. 1, the scanner 1 is provided with a controller 17, a communication portion 18, and a paper carrying drive portion 19. The controller 17 is configured to control each portion of the scanner 1. The communication portion 18 is configured to be capable of wirelessly or wiredly communicating with the PC 2. The paper carrying drive portion 19 is configured to move the roller portions 11a to 11d of the paper carrying mechanism 11 according to commands from the controller 17. The paper carrying drive portion 19 is an example of the "paper carrying portion" in the claims.

The controller 17 is configured to drive the paper the paper carrying drive portion 19 to carry the manuscript P from the paper feed tray 12 to the paper ejection tray 13 and to control the reading portion 15 and the imaging circuit 16 to acquire the image data D1 to DM from the manuscript P when acquiring a control signal for reading the manuscript P from the PC 2 through the communication portion 18. The controller 17 is further configured to transmit the acquired image data D1 to DM to the PC 2 through the communication portion 18.

The structure of the PC 2 is now described.

The PC 2 is provided with a PC controller 21, a storage portion 22, and a communication portion 23. The PC controller 21 is configured to control each portion of the PC 2 and to be capable of controlling the operation of the scanner 1 by executing a scanner control program 22a stored in the storage portion 22. The PC controller 21 is further configured to be capable of performing processing for setting the written page number position ranges R and processing for determining multi feed by executing the scanner control program 22a stored in the storage portion 22. The PC controller 21 is configured to acquire the image data D1 to DM through the communication portion 23 and to control the storage portion 22 to store the image data D1 to DM. The PC controller 21 is an example of the "controller" in the claims.

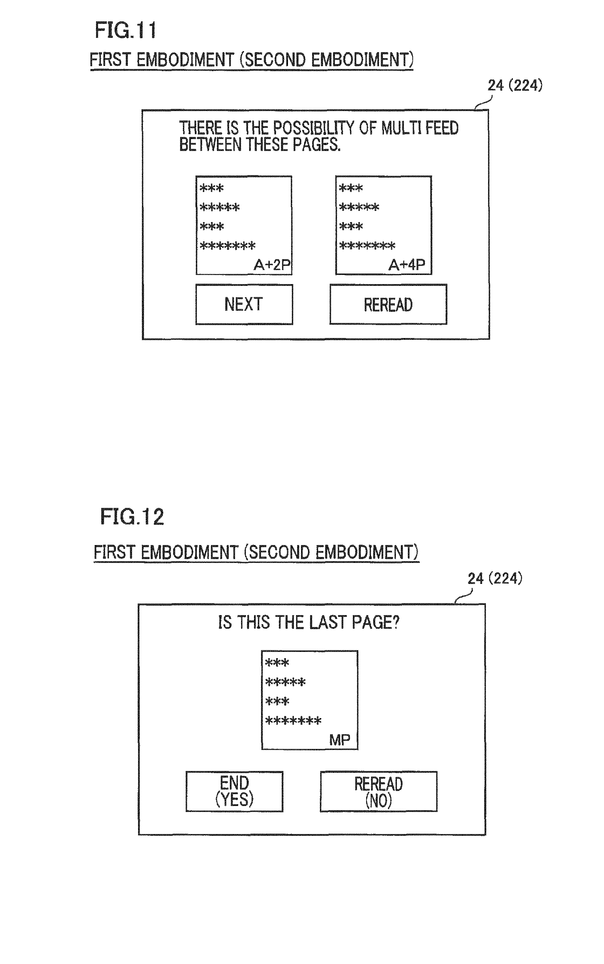

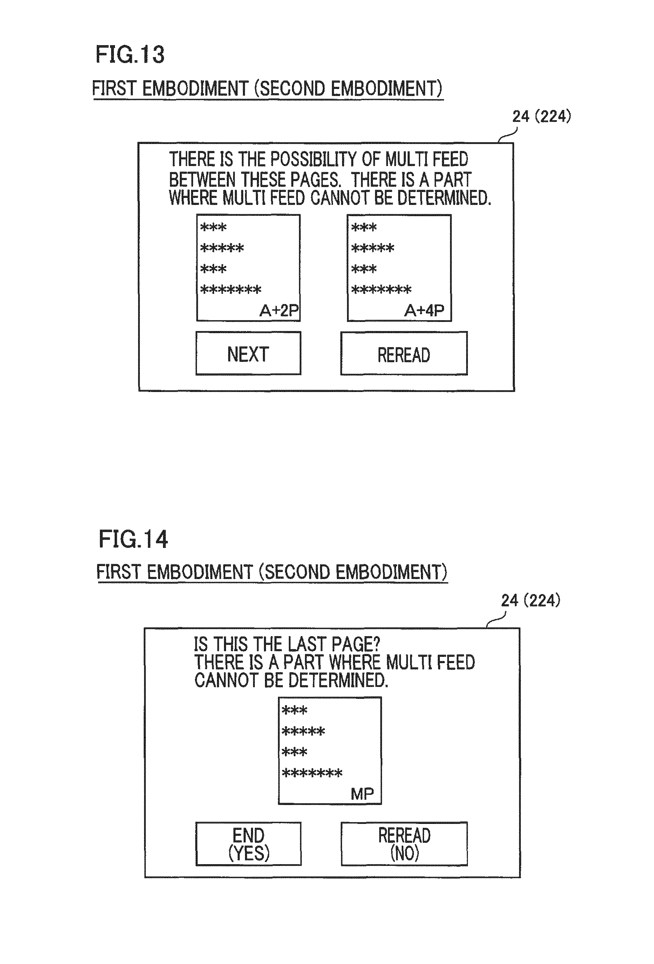

The PC 2 is provided with a display portion 24 and an operation portion 25. The display portion 24 is configured to be capable of displaying the image data D and to display a multi feed part confirmation screen (see Figs. 11 and 13) and a last page confirmation screen (see Figs. 12 and 14) described later. The operation portion 25 includes a keyboard, a mouse, etc., for example, is configured to be capable of accepting an input operation from a user, and is configured to transmit a signal of the input operation to the PC controller 21 when accepting the input operation. The display portion 24 is an external display portion for the scanner 1.

As shown in Fig. 3, the PC controller 21 is configured to set image count numbers Y for the image data D according to the reading order of the scanner 1. When the scanner 1 acquires M pieces of image data D1 to DM, for example, the PC controller 21 is configured to set the image count number Y of the image data D1 as 1, the image count number Y of the image data D2 as 2, and the image count number Y of the image data DM as M according to the reading order of the scanner 1. When there is no multi feed, the value of M is identical to the number N of pages of the manuscript P. The image count numbers Y are examples of the "second information" in the claims.

The PC controller 21 has an optical character recognition function (hereinafter referred to as the "OCR function") of being capable of recognizing characters written in the image data D. A simple function of being capable of recognizing only numbers is preferably employed as the OCR function of the PC controller 21. Thus, a processing load on the PC controller 21 can be reduced in the processing for setting the written page number position ranges R.

The PC controller 21 is configured to be capable of detecting the font sizes and the font types of the numbers written in the image data D.

The processing for setting the written page number position ranges R performed by the image reading device 100 according to the first embodiment is now described.

According to the first embodiment, the PC controller 21 of the image reading device 100 is configured to set the written page number position ranges R of the image data D on the basis of the number U of overlaps of the positions B of the written numbers and addition regularity of read values Z of the numbers written in the positions B (overlapping positions Q) of the written numbers in which the overlap is detected. More specifically, the PC controller 21 is configured to determine the written page number position ranges R on the basis of the overlap of the positions B of the written numbers. The following is a specific description.

The PC controller 21 is configured to determine whether or not the numbers are written in the image data D1 to DM and to acquire positional information about the aforementioned recognized positions B of the written numbers. Fig. 3 shows examples of the acquired image data D1 to D3 and image data DM. In Fig. 3, the positions B of the written numbers are shown by hatching. The marks * represent characters other than numbers. In this case, the image data D1 contains numbers in four positions. The image data D2 contains numbers in nine positions. The image data D3 contains no number. The image data DM contains numbers in eight positions. The PC controller 21 acquires the positional information about the positions B of these written numbers.

According to the first embodiment, the PC controller 21 is configured to detect overlapping positions Q of the positions B of the written numbers in one of at least two of the two or more pieces of image data D and the positions B of the written numbers in the other of at least two of the two or more pieces of image data D, as shown in Fig. 4. An example in which the PC controller 21 detects the overlapping positions Q on the basis of the positions B of the written numbers in all pieces of image data D (D1 to DM) is shown below.

Fig. 4 shows a state where the positions B (see Fig. 3) of the written numbers of the image data D1 to DM are superimposed, for example. The PC controller 21 is configured to detect overlapping positions Q1 to Q7 on the basis of the positions B of the written numbers.

The PC controller 21 is configured to detect the same font sizes and the same font types when detecting the overlapping positions Q and to be capable of setting the positions B of the written numbers in which the overlap is detected as the overlapping positions Q when the numbers of the same font sizes or the same font types overlap with each other. The PC controller 21 is configured to be capable of excluding other than fonts that are likely to be generally employed in writing page numbers (special numbers or the like) when setting the overlapping positions Q.

The PC controller 21 is configured to calculate the number U of overlaps of the positions B of the written numbers in the overlapping positions Q and to determine whether or not a value E (= U/M) obtained by dividing the number U by the total number M (the maximum value M of the image count numbers Y) of image data D is equal to or more than a prescribed number F. The prescribed number F is more than 0 and not more than 1 (0 < F ≤ 1).

In an example shown in Fig. 4, the PC controller 21 calculates the number U of overlaps of the positions B of the written numbers in each of the overlapping positions Q1 to Q7. The PC controller 21 calculates values E1 to E7 corresponding to the overlapping positions Q1 to Q7, respectively. The PC controller 21 compares the values E1 to E7 with the prescribed value F. Assume that the values E1 to E3 are equal to or more than the prescribed value F and the values E4 to E7 are less than the prescribed value F. More specifically, the PC controller 21 is configured to be capable of extracting positions of the image data D in which a relatively large number of numbers are written, such as the overlapping positions Q1 to Q3.

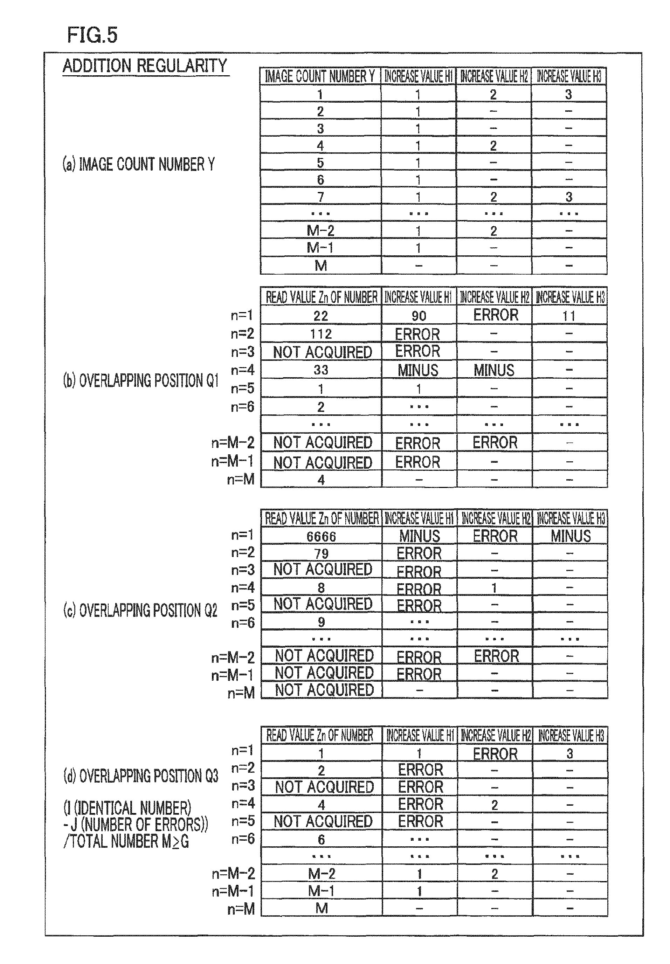

According to the first embodiment, the PC controller 21 is configured to set the written page number position ranges R of the image data D on the basis of the addition regularity of the read values Z of the numbers written in the overlapping positions Q (Q1 to Q3), as shown in Fig. 5.

Specifically, the PC controller 21 is configured to determine that there is the aforementioned addition regularity when the number of times (identical number I) each of increase values H of the image count numbers Y is identical to each of increase values H of the read values Z of the numbers written in the overlapping positions Q1 to Q3 with respect to the total number M of image data D is equal to or more than a prescribed ratio G (I/(M - J) ≥ G; the number J is described later) and to set an overlapping position Q where I/(M - J) ≥ G as the written page number position ranges R.

More specifically, the PC controller 21 is configured to calculate an increase value H1 from a read value Zn corresponding to an image count number Y nth read by the scanner 1 to a read value Zn + 1 corresponding to an image count number Y (n + 1)th read by the scanner 1. The PC controller 21 is also configured to calculate an increase value H2 from the read value Zn to a read value Zn + 2 and an increase value H3 from the read value Zn to a read value Zn + 3. As shown in Fig. 5, the PC controller 21 is configured to calculate the increase value H2 for every three read values Zn of the numbers and the increase value H3 for every six read values Zn of the numbers. The PC controller 21 may be configured to calculate the increase values H2 and H3 for all read values Zn of the numbers.

Fig. 5 shows examples of the increase values H1 to H3 of the image count numbers Y and the increase values H1 to H3 in the overlapping positions Q1 to Q3. View (a) of Fig. 5 shows examples of the increase values H1 to H3 of the image count numbers Y. In this case, the increase value H1 is constantly 1, the increase value H2 is constantly 2, and the increase value H3 is constantly 3. View (b) to view (d) of Fig. 5 show examples of the increase values H1 to H3 in the overlapping positions Q1 to Q3, respectively. When the read values Zn of the numbers are not acquired, "NOT ACQUIRED" is written. The increase values H1 to H3 for the read values Zn written as "NOT ACQUIRED" are written as "ERROR". When the increase values H1 to H3 are minus, the increase values H1 to H3 are written as "MINUS".

The PC controller 21 determines whether or not the increase values H1 to H3 in the overlapping positions Q1 to Q3 are identical to the increase values H1 to H3 of the image count numbers Y, respectively. The PC controller 21 acquires the identical number I for each of the overlapping positions Q1 to Q3. The PC controller 21 acquires the aforementioned number J of "ERROR" for each of the overlapping positions Q1 to Q3. The PC controller 21 sets the overlapping position Q where (I - J)/M ≥ G as the written page number position ranges R when a value obtained by dividing a difference value between the identical number I and the number J of "ERROR" by the number M of pages (= (I - J)/M) is equal to or more than the prescribed ratio G (0.8, for example).

In an example shown in Fig. 5, assume that the overlapping position Q3 meets the aforementioned condition of (I - J)/M ≥ G. In this case, the PC controller 21 sets the overlapping position Q3 as the written page number position ranges R. According to the first embodiment, the PC controller 21 sets an overlapping position Q with the largest number (sample number) of acquired read values Z of the numbers of a plurality of overlapping positions Q as the written page number position ranges R when there are the plurality of overlapping positions Q meeting the condition of (I - J)/M ≥ G. The read values Z of the numbers are examples of the "first information" in the claims.

According to the first embodiment, the PC controller 21 is configured to determine (set) a plurality of written page number position ranges R corresponding to the number of overlapping positions Q when there are the plurality of overlapping positions Q, as shown in Figs. 6 and 7. As shown in Fig. 6, there are the plurality of overlapping positions Q meeting the aforementioned condition of (I - J)/M ≥ G when the page numbers are written at the lower left and lower right of the image data D (papers). In this case, according to the first embodiment, the PC controller 21 is also configured to be capable of setting the written page number position ranges R in not only one position but also two or more positions corresponding to the overlapping positions Q.

As shown in Fig. 7, there are four overlapping positions Q meeting the aforementioned condition of (I - J)/M ≥ G when a plurality of (four) pages of the manuscript P are aggregated in one piece of image data D, and the page numbers are written in four positions of the image data D. In this case, the PC controller 21 sets the written page number position ranges R in the four positions corresponding to the overlapping positions Q.

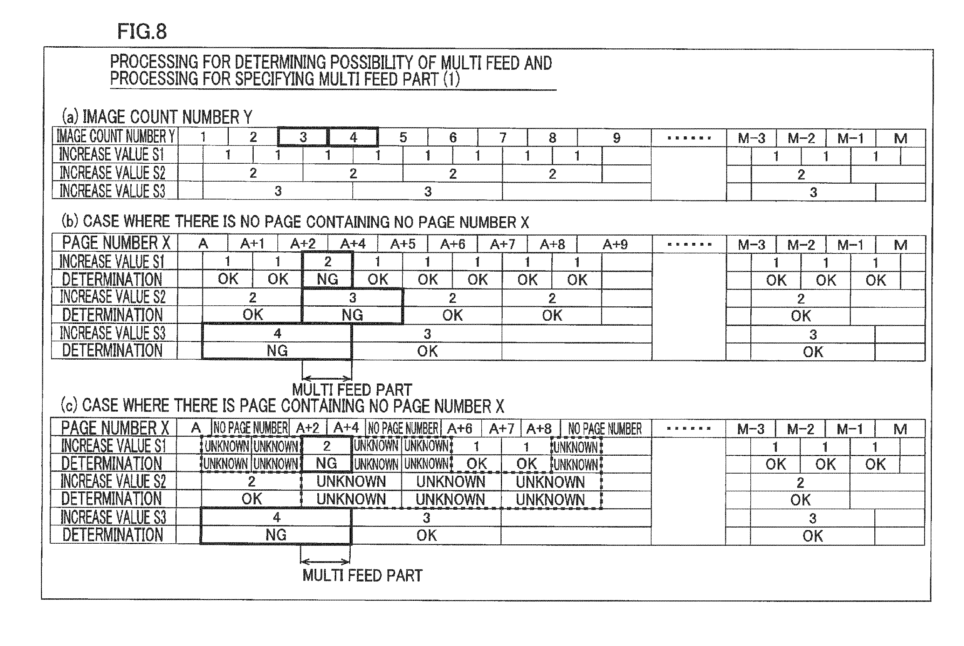

Processing for determining the possibility of multi feed and processing for specifying a multi feed part (when the written page number position ranges R are set in one position) performed by the image reading device 100 are now described with reference to Fig. 8.

As shown in Fig. 8, the PC controller 21 is configured to determine a fault related to the reading order of the scanner 1 for the manuscript P on the basis of the addition regularity of the page numbers X written in the written page number position ranges R. The page numbers X are the same in value as the read values Z of the numbers in the overlapping position Q set as the written page number position ranges R, but the different wordings are used for the purpose of explanation.

Specifically, the PC controller 21 is configured to determine whether or not increase values S1 to S3 of the page numbers X in the written page number position ranges R are identical to increase values S1 to S3 of the image count numbers Y, respectively. As shown in view (b) of Fig. 8, the PC controller 21 is configured to determine that there is the fault related to the reading order of the manuscript P (there is multi feed) when the increase values S1 to S3 of the page numbers X are not identical to the increase values S1 to S3 of the image count numbers Y, respectively. In Fig. 8, "OK" is written when the increase values of the page numbers X are identical to the increase values of the image count numbers Y, and "NG" is written when the increase values of the page numbers X are not identical to the increase values of the image count numbers Y.

More specifically, the PC controller 21 is configured to detect a part(s) where the increase value S1 of the page numbers X is not 1, a part(s) where the increase value S2 of the page numbers X is not 2, and a part(s) where the increase value S3 of the page numbers X is not 3.

View (a) of Fig. 8 shows the increase values S1 to S3 of the image count numbers Y. The increase values S1 to S3 of the image count numbers Y are calculated similarly to the aforementioned increase values H1 to H3 of the image count numbers Y. More specifically, the increase value S1 is 1, the increase value S2 is 2, and the increase value S3 is 3.

View (b) of Fig. 8 shows the increase values S1 to S3 of the page numbers X. The increase values S1 to S3 of the page numbers X are calculated similarly to the aforementioned increase values H1 to H3 of the page numbers X. The number A is a page number X of the first image data D read by the scanner 1 and is an integer smaller than M. View (b) of Fig. 8 shows an example in which there is no page containing no page number X in the image data D1 to DM.

In the example shown in view (b) of Fig. 8, the PC controller 21 is configured to determine that there is the possibility of multi feed between a part corresponding to an image count number Y of 3 and a part corresponding to an image count number Y of 4 by specifying that the part where the increase value S1 of the page numbers X is not 1, the part where the increase value S2 of the page numbers X is not 2, and the part where the increase value S3 of the page numbers X is not 3 are located between the part corresponding to the image count number Y of 3 and the part corresponding to the image count number Y of 4.

As shown in view (c) of Fig. 8, the PC controller 21 determines that there is the fault related to the reading order of the manuscript P (there is multi feed) when the increase values S1 to S3 of the page numbers X are not identical to the increase values S1 to S3 of the image count numbers Y, respectively, or it is unknown whether or not the increase values S1 to S3 of the page numbers X are identical to the increase values S1 to S3 of the image count numbers Y, respectively. In view (c) of Fig. 8, pages containing no page number X are written as "NO PAGE NUMBER". The increase values S1 to S3 for the pages containing no page number X are ones in the case where it is unknown whether or not the increase values S1 to S3 of the page numbers X are identical to the increase values S1 to S3 of the image count numbers Y, as described above.

View (c) of Fig. 8 shows an example in which there are the pages containing no page number X in the image data D1 to DM. In this case, the PC controller 21 is configured to determine that there is the possibility of multi feed between the part corresponding to the image count number Y of 3 and the part corresponding to the image count number Y of 4 by specifying that a part where the increase value S1 of the page numbers X is not 1 or the increase value S1 is unknown, a part where the increase value S2 of the page numbers X is not 2 or the increase value S2 is unknown, and a part where the increase value S3 of the page numbers X is not 3 or the increase value S3 is unknown are located between the part corresponding to the image count number Y of 3 and the part corresponding to the image count number Y of 4.

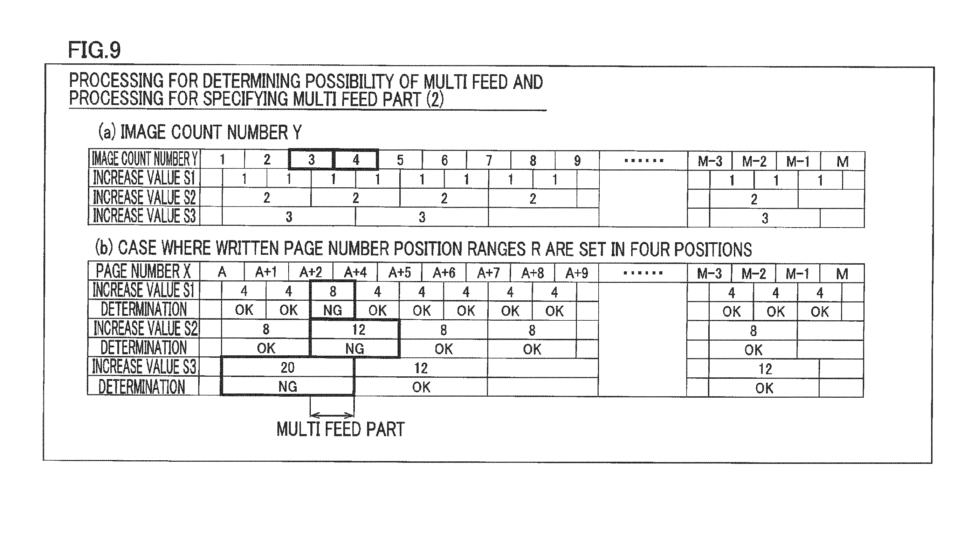

Processing for determining the possibility of multi feed and processing for specifying the multi feed part (when the written page number position ranges R are set in two or more positions) performed by the image reading device 100 are now described with reference to Fig. 9. Fig. 9 shows an example in which the written page number position ranges R are set in four positions.

The PC controller 21 is configured to determine whether or not the increase values S1 to S3 of the page numbers X in the written page number position ranges R are identical to the quadruple of the increase values S1 to S3 of the image count numbers Y, respectively. As shown in view (b) of Fig. 9, the PC controller 21 is configured to determine that there is the fault related to the reading order of the manuscript P (there is multi feed) when the increase values S1 to S3 of the page numbers X are not identical to the quadruple of the increase values S1 to S3 of the image count numbers Y, respectively.

More specifically, the PC controller 21 is configured to detect a part(s) where the increase value S1 of the page numbers X is not 4, a part(s) where the increase value S2 of the page numbers X is not 8, and a part(s) where the increase value S3 of the page numbers X is not 12.

In addition to the aforementioned structure, the PC controller 21 may be configured to determine that there is no multi feed when the last (maximum) page number XM is identical to the quadruple of the last (maximum) image count number YM and determine that there is multi feed when the last (maximum) page number XM is not identical to the quadruple of the last (maximum) image count number YM.

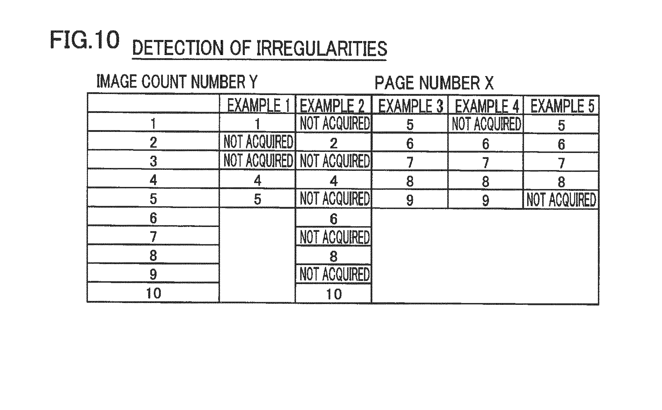

Processing for detecting an irregularity in the processing for determining multi feed performed by the image reading device 100 is now described with reference to Fig. 10.

According to the first embodiment, the image reading device 100 (PC controller 21) is configured to determine whether or not there is the fault related to the reading order of the manuscript P on the basis of the page number X of the image data D excluding the image data D in which the page number X is not written when there is a page(s) in which the page number(s) X is not written in the written page number position ranges R of the image data D (a page(s) in which the page number(s) X is not acquired).

Specifically, the PC controller 21 is configured to determine whether or not there is the fault related to the reading order of the manuscript P by further considering a page number X1, the page number XM, and either a minimum page number XA or a maximum number XB of pages in which the page numbers X are acquired after the aforementioned processing for determining the possibility of multi feed. This processing is described later in detail with reference to Figs. 10, 17, and 18.

The multi feed part confirmation screen and the last page confirmation screen are now described with reference to Figs. 11 to 14.

According to the first embodiment, the image reading device 100 (PC controller 21) is configured to display the image data D corresponding to the fault related to the reading order of the manuscript P on the display portion 24 when determining that there is the fault related to the reading order of the manuscript P (see Figs. 11 and 13) and to display the last page (image data DM) of the image data D on the display portion 24 when determining that there is no fault related to the reading order of the manuscript P (see Figs. 12 and 14).

Specifically, the PC controller 21 displays an indication of the multi feed part on the display portion 24 when determining that there is the fault related to the reading order of the manuscript P, as shown in Fig. 11. The indication of the multi feed part indicates image data D of image count numbers Y before and after the multi feed part specified through the aforementioned processing for specifying the multi feed part. In Fig. 11, the image data D3 whose image count number Y is 3 and the image data D4 whose image count number Y is 4 are described as examples of the image data D before and after the multi feed part.

The PC controller 21 is configured to display a message for notifying the user of the possibility of multi feed ("THERE IS THE POSSIBILITY OF MULTI FEED BETWEEN THESE PAGES.", for example) together with the aforementioned image data D before and after the multi feed part and operation indications ("NEXT" and "REREAD", for example) on the display portion 24.

The PC controller 21 is configured to display an indication of the next multi feed part if there is another multi feed part and display the last page (see Fig. 12) described later if there are no more multi feed parts on the display portion 24 when "NEXT" is selected on the basis of an input operation corresponding to the operation indication performed on the operation portion 25 by the user.

The PC controller 21 is configured to read a page(s) of the manuscript P corresponding to the multi feed part by the scanner 1 after the user places the page(s) of the manuscript P corresponding to the multi feed part on the paper feed tray 12 when "REREAD" is selected on the basis of an input operation corresponding to the operation indication performed on the operation portion 25 by the user. The PC controller 21 is configured to store the read image data D as the page(s) corresponding to the multi feed part in the storage portion 22.

As shown in Fig. 12, the PC controller 21 is configured to display the image data DM, which is the last page of the image data D, on the display portion 24 when determining that there is no fault related to the reading order of the manuscript P. The PC controller 21 is configured to display a message for confirming whether or not this is the last page with the user ("IS THIS THE LAST PAGE?", for example) together with the image data DM and operation indications ("END" and "REREAD", for example) on the display portion 24.

The PC controller 21 is configured to control the scanner 1 to read the last page of the manuscript P after the user places the last page of the manuscript P on the paper feed tray 12 when "REREAD" is selected on the basis of an input operation corresponding to the operation indication performed on the operation portion 25 by the user. The PC controller 21 is configured to store the read image data D as the last page (image data DM) in the storage portion 22.

The PC controller 21 terminates the overall processing for determining multi feed of the manuscript P when "END" is selected on the basis of an input operation corresponding to the operation indication performed on the operation portion 25 by the user.

As shown in Figs. 13 and 14, the PC controller 21 is configured to display an indication that there is a part where multi feed cannot be determined, described later, together with the aforementioned image data D (see Fig. 13) corresponding to the fault related to the reading order of the manuscript P or the image data D (image data DM) (see Fig. 14) of the last page on the display portion 24 when determining that there is the part where multi feed cannot be determined during the processing for detecting the irregularity.

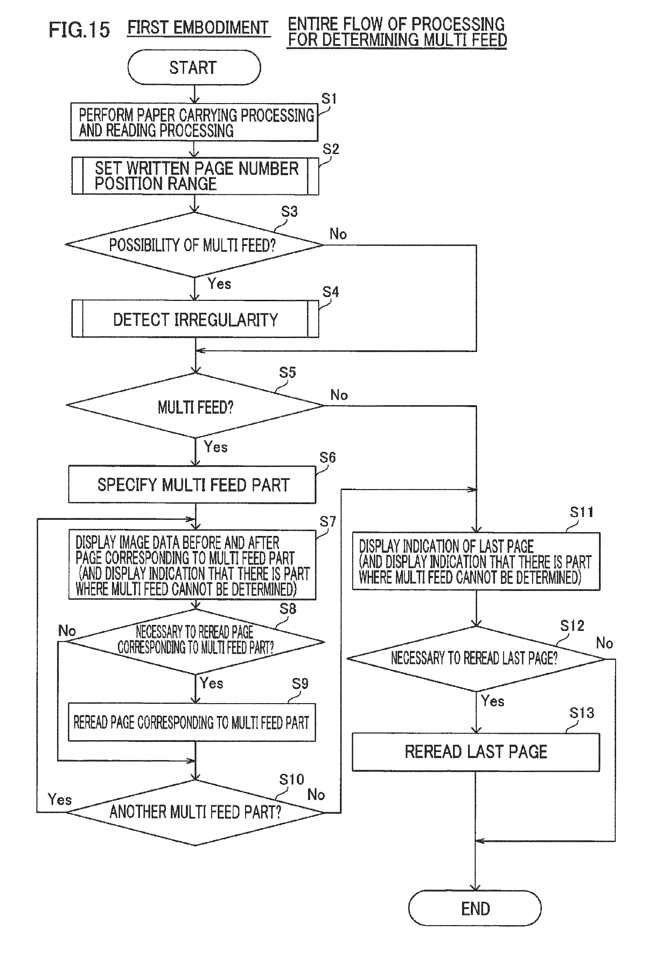

An entire flow of the processing for determining multi feed performed by the image reading device 100 according to the first embodiment is now described with reference to Fig. 15. The following control processing is performed by the controller 17 of the scanner 1 and the PC controller 21 of the PC 2.

First, paper carrying processing and reading processing (see Fig. 2) are performed by the scanner 1 at a step S1. Then, the processing for determining multi feed advances to a step S2.

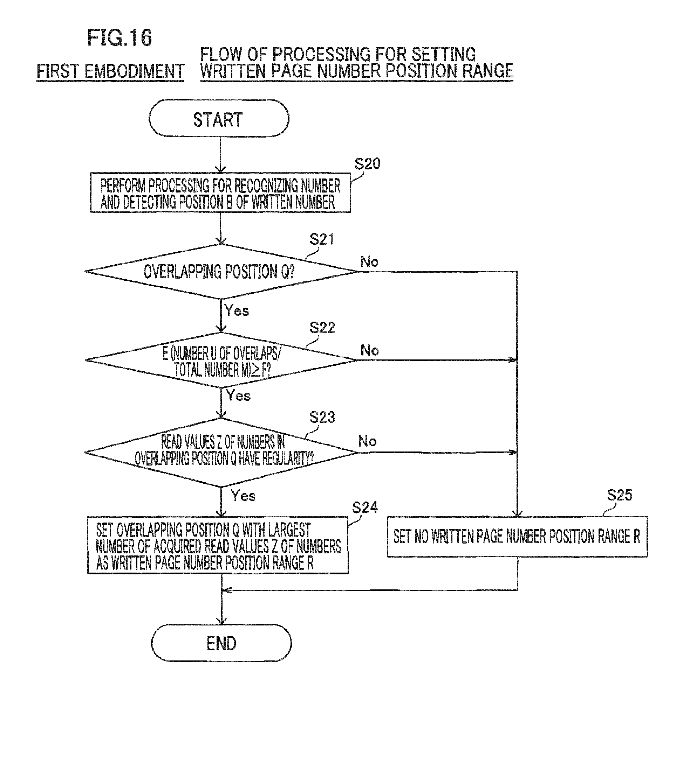

At the step S2, the written page number position ranges R are set (see Fig. 16). Then, the processing for determining multi feed advances to a step S3.

At the step S3, it is determined whether or not there is the possibility of multi feed (see Fig. 8). When it is determined that there is the possibility of multi feed, the processing for determining multi feed advances to a step S4, and when it is determined that there is no possibility of multi feed, the processing for determining multi feed advances to a step S5.

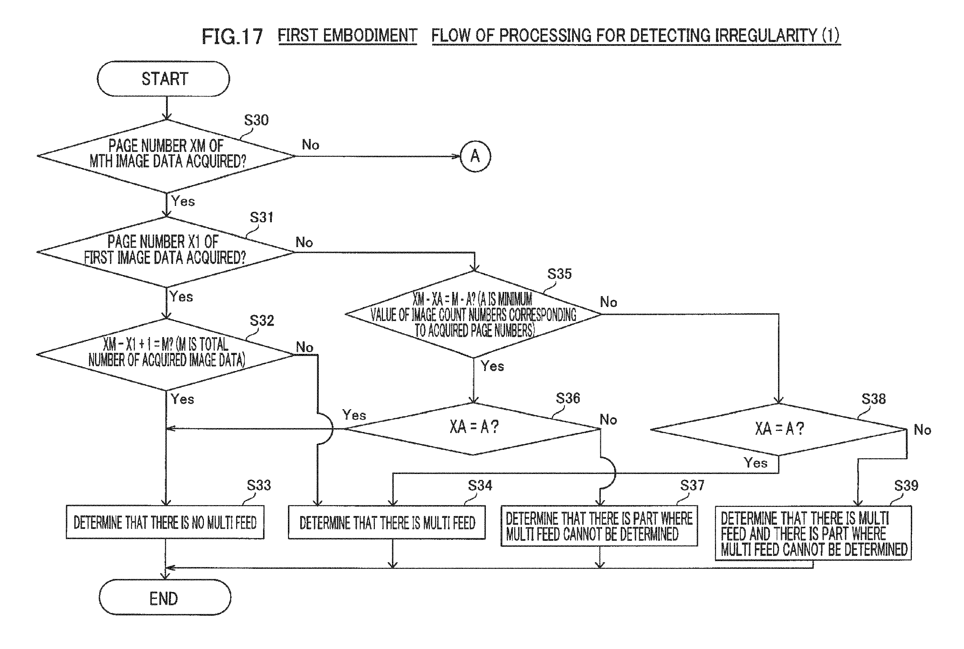

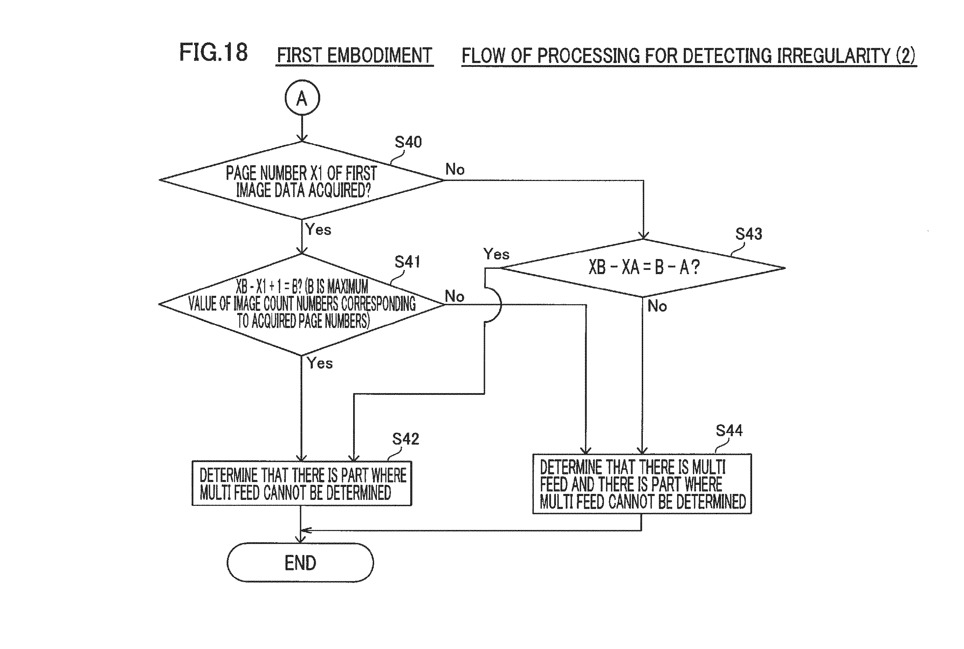

At the step S4, the processing for detecting the irregularity is performed (see Figs. 17 and 18). Then, the processing for determining multi feed advances to the step S5.

When it is determined that there is multi feed at the step S5, the processing for determining multi feed advances to a step S6, and when it is determined that there is no multi feed at the step S5, the processing for determining multi feed advances to a step S11.

At the step S6, the processing for specifying the multi feed part is performed (see Fig. 8). Then, the processing for determining multi feed advances to a step S7.

At the step S7, the image data D (multi feed part confirmation screen) before and after the page(s) (image count number(s) Y) corresponding to the multi feed part specified through the processing for specifying the multi feed part at the step S6 is displayed on the display portion 24 (see Fig. 11). As described later, the indication that there is the part where multi feed cannot be determined together with the aforementioned image data D before and after the multi feed part is displayed on the display portion 24 (see Fig. 13) when it is determined that there is the part where multi feed cannot be determined at the step S4. Then, the processing for determining multi feed advances to a step S8.

At the step S8, it is determined whether or not it is necessary to reread the page(s) corresponding to the multi feed part on the basis of the selection operation performed on the operation portion 25 by the user. When the user selects the operation indication of "REREAD" in Fig. 11, for example, the processing for determining multi feed advances to a step S9, and when the user selects the operation indication of "NEXT" in Fig. 11, for example, the processing for determining multi feed advances to a step S10.

At the step S9, the processing for reading the page(s) corresponding to the multi feed part is performed by the scanner 1. This reading processing at the step S9 may be started on the basis of the input operation performed on the operation portion 25 by the user after an indication asking the user whether or not the page(s) (manuscript P) corresponding to the multi feed part is placed on the paper feed tray 12 is displayed on the display portion 24, or may be started after a sensor or the like provided to detect that the manuscript P is placed on the paper feed tray 12 detects that the manuscript P is placed on the paper feed tray 12.

At the step S10, it is determined whether or not there is another multi feed part. More specifically, it is determined whether or not there is another multi feed part other than the page(s) corresponding to the aforementioned multi feed part. When there is another multi feed part other than the page(s) corresponding to the aforementioned multi feed part, the processing for determining multi feed advances to the step S7, and when there is no multi feed part other than the page(s) corresponding to the aforementioned multi feed part, the processing for determining multi feed advances to the step S11.

At the step S11 to which the processing for determining multi feed advances when it is determined that there is no multi feed at the step S5 or it is determined that there is no multi feed part at the step S10, an indication of the last page (last page confirmation screen) (see Fig. 12) is displayed on the display portion 24. Then, the processing for determining multi feed advances to a step S12.

At the step S12, it is determined whether or not it is necessary to reread the last page on the basis of the selection operation performed on the operation portion 25 by the user. When the user selects the operation indication of "REREAD" in Fig. 12, for example, the processing for determining multi feed advances to a step S13, and when the user selects the operation indication of "END" in Fig. 12, for example, the entire flow of the processing for determining multi feed according to the first embodiment is terminated.

A flow of the processing for setting the written page number position ranges R performed by the image reading device 100 according to the first embodiment is now described with reference to Fig. 16. The following control processing is performed by the PC controller 21 of the PC 2. The processing for setting the written page number position ranges R corresponds to the step S2 in the aforementioned entire flow of the processing for determining multi feed.

First, the processing for recognizing numbers and detecting the positions B of the written numbers is performed (see Fig. 3) at a step S20. Then, the processing for setting the written page number position ranges R advances to a step S21.

At the step S21, it is determined whether or not there are the overlapping positions Q (see Fig. 4). When it is determined that there are the overlapping positions Q, the processing for setting the written page number position ranges R advances to a step S22, and when it is determined that there is no overlapping position Q, the processing for setting the written page number position ranges R advances to a step S25.

At the step S22, it is determined whether or not the value E obtained by dividing the number U of overlaps of the positions B of the written numbers by the total number M of image data D is equal to or more than the prescribed number F (see Fig. 4). When it is determined that the value E is equal to or more than the prescribed number F, the processing for setting the written page number position ranges R advances to a step S23, and when it is determined that the value E is not equal to or more than the prescribed number F, the processing for setting the written page number position ranges R advances to the step S25.

At the step S23, it is determined whether or not the read values Z of the numbers in the overlapping positions Q have regularity (addition regularity) (see Fig. 5). When it is determined that the read values Z of the numbers in the overlapping positions Q have regularity, the processing for setting the written page number position ranges R advances to a step S24, and when it is determined that the read values Z of the numbers in the overlapping positions Q have no regularity, the processing for setting the written page number position ranges R advances to the step S25.

At the step S24, one of the overlapping positions Q with the largest sample number (number) of read values Z of the numbers is set as the written page number position ranges R. Then, the processing for setting the written page number position ranges R according to the first embodiment is terminated.

When the processing for setting the written page number position ranges R advances to the step S25, no written page number position range R is set, and the processing for setting the written page number position ranges R according to the first embodiment is terminated. In this case, a determination about multi feed is not made, but the processing for setting the written page number position ranges R advances to the step S11 in the entire flow of the processing for determining multi feed, for example.

A flow of the processing for detecting the irregularity performed by the image reading device 100 according to the first embodiment is now described with reference to Figs. 17 and 18. The following control processing is performed by the PC controller 21 of the PC 2. The processing for detecting the irregularity corresponds to the step S4 in the aforementioned entire flow of the processing for determining multi feed.

First, it is determined whether or not the page number XM of the Mth image data D (image data DM) is acquired at a step S30, as shown in Fig. 17. More specifically, it is determined whether or not the page number X of the last page of the image data D read by the scanner 1 is acquired. When it is determined that the page number XM is acquired, the processing for detecting the irregularity advances to a step S31, and when it is determined that the page number XM is not acquired, the processing for detecting the irregularity advances to a step S40 (see Fig. 18).

At the step S31, it is determined whether or not the page number X1 of the first image data D (image data D1) is acquired. More specifically, it is determined whether or not the page number X of the first page of the image data D read by the scanner 1 is acquired. When it is determined that the page number X1 is acquired, the processing for detecting the irregularity advances to a step S32, and when it is determined that the page number X1 is not acquired, the processing for detecting the irregularity advances to a step S35.

At the step S32, it is determined whether or not the sum (XM - X1 + 1) of a difference value between the page number XM and the page number X1 and 1 is M. When it is determined that XM - X1 + 1 = M, the processing for detecting the irregularity advances to a step S33, and when it is determined that XM - X1 + 1 ≠ M, the processing for detecting the irregularity advances to a step S34.

At the step S33, it is determined that there is no fault related to the reading order of the manuscript P and there is no multi feed of the manuscript P. In this case, it is determined that there is no multi feed of the manuscript P as the irregularity even when it is determined that there is the possibility of multi feed at the step S3 in the aforementioned entire flow of the processing for determining multi feed.

At the step S34 to which the processing for detecting the irregularity advances when it is determined that XM - X1 + 1 ≠ M at the step S32, it is determined that there is multi feed of the manuscript P.

At the step S35 to which the processing for detecting the irregularity advances when it is determined that the page number X1 is not acquired at the step S31, it is determined whether or not a difference value between the page number XM and the page number XA is equal to a difference value between the total number M and the number A (XM - XA = M - A), setting the minimum value of the image count numbers Y corresponding to the acquired page numbers X as the number A and the page number of image data DA corresponding to the Ath image count number Y as the page number XA. When it is determined that XM - XA = M - A, the processing for detecting the irregularity advances to a step S36, and when it is determined that XM - XA ≠ M - A, the processing for detecting the irregularity advances to a step S38.

At the step S36, it is determined whether or not the page number XA is equal to the number A. When it is determined that the page number XA is equal to the number A, the processing for detecting the irregularity advances to the step S33. More specifically, when it is determined that XM - XA = M - A and XA = A, it is determined that there is no multi feed. When it is determined that the page number XA is different from the number A, the processing for detecting the irregularity advances to a step S37.

At the step S37, it is determined that there is the part of the image data D where multi feed cannot be determined, and the processing for detecting the irregularity according to the first embodiment is terminated. In this case, in the entire flow of the processing for determining multi feed, the processing for determining multi feed advances to the step S11 after the step S5, and the last page confirmation screen shown in Fig. 14 is displayed on the display portion 24.

At the step S38 to which the processing for detecting the irregularity advances when it is determined that XM - XA ≠ M - A at the step S35, it is determined whether or not the page number XA is equal to the number A. When it is determined that the page number XA is equal to the number A, the processing for detecting the irregularity advances to the step S34. More specifically, when it is determined that XM - XA ≠ M - A and XA = A, it is determined that there is multi feed. When it is determined that the page number XA is different from the number A, the processing for detecting the irregularity advances to a step S39.

At the step S39, it is determined that there is multi feed, and it is determined that there is the part of the image data D where multi feed cannot be determined. Then, the processing for detecting the irregularity according to the first embodiment is terminated. In this case, in the entire flow of the processing for determining multi feed, the processing for determining multi feed advances to the steps S6 and S7 after the step S5, and the multi feed part confirmation screen shown in Fig. 13 is displayed on the display portion 24.

As shown in Fig. 18, at the step S40 to which the processing for detecting the irregularity advances when it is determined that the page number XM is not acquired at the step S30, it is determined whether or not the page number X1 of the first image data D (image data D1) is acquired. When it is determined that the page number X1 is acquired, the processing for detecting the irregularity advances to a step S41, and when it is determined that the page number X1 is not acquired, the processing for detecting the irregularity advances to a step S43.

At the step S41, it is determined whether or not the sum of a difference value between the page number XB and the page number X1 and 1 is equal to a number B (XB - X1 + 1 = B), setting the maximum value of the image count numbers Y corresponding to the acquired page numbers X as the number B and the page number of image data DB corresponding to the Bth image count number Y as the page number XB. When it is determined that XB - X1 + 1 = B, the processing for detecting the irregularity advances to a step S42, and when it is determined that XB - X1 + 1 ≠ B, the processing for detecting the irregularity advances to a step S44.

At the step S42, it is determined that there is the part of the image data D where multi feed cannot be determined, and the processing for detecting the irregularity according to the first embodiment is terminated.

At the step S43 to which the processing for detecting the irregularity advances when it is determined that the page number X1 is not acquired at the step S40, it is determined whether or not a difference value between the page number XB and the page number XA is equal to a difference value between the number B and the number A (XB - XA = B - A). When it is determined that XB - XA = B - A, the processing for detecting the irregularity advances to the step S42, and when it is determined that XB - XA ≠ B - A, the processing for detecting the irregularity advances to the step S44.

At the step S44, it is determined that there is multi feed and there is the part of the image data D where multi feed cannot be determined. Then, the processing for detecting the irregularity according to the first embodiment is terminated.

The processing for detecting the irregularity for each of Examples 1 to 5 shown in Fig. 10 is now described concretely along flowcharts shown in Figs. 17 and 18.

### (Example 1)

As shown in Figs. 10 and 17, the page numbers X of the second image data D2 and the third image data D3 (whose image count numbers Y are 2 and 3) are not acquired in Example 1. In this case, it may be determined that there is the possibility of multi feed when the aforementioned processing for determining the possibility of multi feed (see Fig. 8) is performed.

First, it is determined whether or not the page number X5 of the fifth image data D5 is acquired at the step S30. In Example 1, the page number X5 of the fifth image data D5 (whose image count number Y is 5), which is 5, is acquired. Therefore, the processing for detecting the irregularity advances to the step S31.

At the step S31, it is determined whether or not the page number X1 of the first image data D1 is acquired. In Example 1, the page number X1 of the first image data D1 (whose image count number Y is 1), which is 1, is acquired. Therefore, the processing for detecting the irregularity advances to the step S32.

At the step S32, it is determined whether or not X5 - X1 + 1 = 5. Since X5 = 5, X1 = 1, and 5 - 1 + 1 = 5 in the case of Example 1, the processing for detecting the irregularity advances to the step S33.

At the step S33, it is determined that there is no multi feed in Example 1. More specifically, it is determined that there is no multi feed as the irregularity in Example 1. Then, the flow of the processing for detecting the irregularity for Example 1 is terminated.

### (Example 2)

As shown in Figs. 10 and 17, the page numbers X are not acquired for every two pieces of image data from the first image data D1 in Example 2. In this case, it may be determined that there is the possibility of multi feed when the aforementioned processing for determining the possibility of multi feed (see Fig. 8) is performed.

First, it is determined whether or not the page number X10 of the tenth image data D10 is acquired at the step S30. In Example 2, the page number X10 of the tenth image data D10 (whose image count number Y is 10), which is 10, is acquired. Therefore, the processing for detecting the irregularity advances to the step S31.

At the step S31, it is determined whether or not the page number X1 of the first image data D1 is acquired. In Example 2, the page number X1 of the first image data D1 is not acquired. Therefore, the processing for detecting the irregularity advances to the step S35.

At the step S35, it is determined whether or not X10 - X2 = 10 - 2. Since X10 = 10, X2 = 2, and 10 - 2 = 10 - 2 in the case of Example 2, the processing for detecting the irregularity advances to the step S36.

At the step S36, it is determined whether or not X2 = 2. Since X2 = 2 in the case of Example 2, the processing for detecting the irregularity advances to the step S33. At the step S33, it is determined that there is no multi feed in Example 2. Then, the flow of the processing for detecting the irregularity for Example 2 is terminated.

### (Example 3)

As shown in Figs. 10 and 17, the page number X of the first image data D1 is 5, the page number X of the second image data D2 is 6, the page number X of the third image data D3 is 7, the page number X of the fourth image data D4 is 8, and the page number X of the fifth image data D5 is 9 in Example 3.

First, it is determined whether or not the page number X5 of the fifth image data D5 is acquired at the step S30.

In Example 3, the page number X5 of the fifth image data D5 (whose image count number Y is 5), which is 9, is acquired. Therefore, the processing for detecting the irregularity advances to the step S31.

At the step S31, it is determined whether or not the page number X1 of the first image data D1 is acquired. In Example 3, the page number X1 of the first image data D1, which is 5, is acquired. Therefore, the processing for detecting the irregularity advances to the step S32.

At the step S32, it is determined whether or not X5 - X1 + 1 = 5. Since X5 = 9, X1 = 5, and 9 - 5 + 1 = 5 in the case of Example 3, it is determined that there is no multi feed in Example 3 at the step S33. Then, the flow of the processing for detecting the irregularity for Example 3 is terminated.

### (Example 4)

As shown in Figs. 10 and 17, the page number X of the first image data D1 is not acquired, the page number X of the second image data D2 is 6, the page number X of the third image data D3 is 7, the page number X of the fourth image data D4 is 8, and the page number X of the fifth image data D5 is 9 in Example 4.

First, it is determined whether or not the page number X5 of the fifth image data D5 is acquired at the step S30. In Example 4, the page number X5 of the fifth image data D5 (whose image count number Y is 5), which is 9, is acquired. Therefore, the processing for detecting the irregularity advances to the step S31.

At the step S31, it is determined whether or not the page number X1 of the first image data D1 is acquired. In Example 4, the page number X1 of the first image data D1 is not acquired. Therefore, the processing for detecting the irregularity advances to the step S35.

At the step S35, it is determined whether or not X5 - X2 = 5 - 2. Since X5 = 9, X2 = 6, and 9 - 6 = 5 - 2 in the case of Example 4, the processing for detecting the irregularity advances to the step S36.

At the step S36, it is determined whether or not X2 = 2. Since X2 = 6 in the case of Example 4, the processing for detecting the irregularity advances to the step S37.

At the step S37, it is determined that there is the part where multi feed cannot be determined in Example 4, and the flow of the processing for detecting the irregularity for Example 4 is terminated.

### (Example 5)

As shown in Figs. 10 and 17, the page number X of the first image data D1 is 5, the page number X of the second image data D2 is 6, the page number X of the third image data D3 is 7, the page number X of the fourth image data D4 is 8, and the page number X of the fifth image data D5 is not acquired in Example 5.

First, it is determined whether or not the page number X5 of the fifth image data D5 is acquired at the step S30. In Example 5, the page number X5 of the fifth image data D5 is not acquired. Therefore, the processing for detecting the irregularity advances to the step S40 (see Fig. 18).

At the step S40, it is determined whether or not the page number X1 of the first image data D1 is acquired. In Example 5, the page number X1 of the first image data D1, which is 5, is acquired. Therefore, the processing for detecting the irregularity advances to the step S41.

At the step S41, it is determined whether or not X4 - X1 + 1 = 4. Since X4 = 8, X1 = 5, and 8 - 5 + 1 = 4 in the case of Example 5, the processing for detecting the irregularity advances to the step S42.

At the step S42, it is determined that there is the part where multi feed cannot be determined in Example 5, and the flow of the processing for detecting the irregularity for Example 5 is terminated.

According to the first embodiment, the following effects can be obtained.

According to the first embodiment, as hereinabove described, the image reading device 100 is configured to determine whether or not there is the fault related to the reading order of the manuscript P on the basis of the page numbers X, which are the numbers written in the written page number position ranges R of the image data D. Thus, no detector configured to detect the fault related to the reading order of the manuscript P (multi feed, for example), such as an ultrasonic sensor may be provided separately from the reading portion 15. Therefore, the image reading device 100 can be configured to determine the fault related to the reading order of the manuscript P while suppressing complication of the structure of the scanner 1. Furthermore, the image reading device 100 sets the written page number position ranges R of the image data D on the basis of the positional information about the positions B of the written numbers in the image data D, and hence the user may not set the written page number position ranges R of the image data D. Consequently, the user may not set the written page number position ranges R of the image data D, and hence operational convenience for the user can be improved. In addition, the image reading device 100 sets the written page number position ranges R of the image data D on the basis of the positional information about the positions B of the written numbers in at least two of the two or more pieces of image data D, and hence the image reading device 100 can more accurately set the written page number position ranges R, as compared with the case where the image reading device sets the positions B of the written numbers in one piece of image data D as the written page number position ranges R of the image data D. As described above, the PC controller 21 is preferably configured to determine the page count numbers Y based on the reading order of the image data D and to detect multi feed of the manuscript P on the basis of the page numbers X contained in the written page number position ranges R and the page count numbers Y.

According to the first embodiment, as hereinabove described, the PC controller 21 is configured to determine the plurality of written page number position ranges R corresponding to the number of overlapping positions Q when there are the plurality of overlapping positions Q on the basis of the overlap of the positional information about the positions B of the written numbers. Thus, the PC controller 21 can determine the plurality of written page number position ranges R when the scanner 1 reads the manuscript P having the plurality of pages aggregated in one piece of image data D. Consequently, even when the scanner 1 reads the manuscript P having the plurality of pages aggregated in one piece of image data D, the image reading device 100 can detect the read fault of the manuscript P on the basis of the page numbers X contained in the plurality of written page number position ranges R and the page count numbers Y.

According to the first embodiment, as hereinabove described, the PC controller 21 is configured to determine the overlapping position Q with the largest number (sample number) of acquired read values Z of the numbers of the plurality of overlapping positions Q as the written page number position ranges R when there are the plurality of overlapping positions Q. Thus, the PC controller 21 can more accurately determine the written page number position ranges R.

According to the first embodiment, as hereinabove described, the image reading device 100 is configured to set the written page number position ranges R of the image data D by detecting the overlap of the positions B of the written numbers in one of at least two of the two or more pieces of image data D and the positions B of the written numbers in the other of at least two of the two or more pieces of image data D. The positions of written page numbers in a common manuscript P are frequently set to prescribed positions (same positions) even in different pages. More specifically, the positions of the written page numbers in the manuscript P frequently overlap each other over a plurality of pages. In consideration of this point, according to the first embodiment, the overlap of the positions B of the written numbers in one image data D and the positions B of the written numbers in another image data D is detected, whereby the written page number position ranges R of the image data D are set, and hence the written page number position ranges R of the image data D can be easily set.

According to the first embodiment, as hereinabove described, the image reading device 100 is configured to set the written page number position ranges R of the image data D on the basis of the regularity of the numbers (the read values Z of the numbers) written in the positions (overlapping positions Q) of the written numbers in which the overlap is detected. Thus, the page numbers of the manuscript P generally have regularity, and hence the image reading device 100 can more accurately set the written page number position ranges R of the image data D by setting the written page number position ranges R of the image data D on the basis of the regularity of the read values Z of the numbers.

According to the first embodiment, as hereinabove described, the image reading device 100 is configured to acquire the number U of overlaps of the overlapping positions Q and to set the written page number position ranges R of the image data D on the basis of the number U of overlaps and the regularity of the read values Z of the numbers written in the positions of the written numbers in which the overlap is detected. Thus, the image reading device 100 can more accurately set the written page number position ranges R of the image data D, as compared with the case where the image reading device 100 sets the written page number position ranges R of the image data D only by detecting the overlap of the positions B of the written numbers.

According to the first embodiment, as hereinabove described, the image reading device 100 is configured to display the image data D corresponding to the fault related to the reading order of the manuscript P on the display portion 24 when determining that there is the fault related to the reading order of the manuscript P (multi feed) and to display the last page (image data DM) of the image data D on the display portion 24 when determining that there is no fault related to the reading order of the manuscript P (no multi feed). Thus, the user can visually recognize the image data D corresponding to the fault related to the reading order of the manuscript P when there is the fault related to the reading order of the manuscript P (multi feed). Furthermore, the user can visually recognize (confirm) the last page (image data DM) of the image data D when determining that there is no fault related to the reading order of the manuscript P (no multi feed).

According to the first embodiment, as hereinabove described, the image reading device 100 is configured to determine whether or not there is the fault related to the reading order of the manuscript P on the basis of the page number X (the page number X1, XM, XA, or XB) of the image data D excluding the image data D in which the page number X is not written when there is the page(s) in which the page number(s) X is not written in the written page number position ranges R of the image data D. In a manuscript P such as a common magazine, for example, there is a page(s) containing a page number(s) and a page(s) (such as a picture page(s)) containing no page number. In this case, if the image reading device 100 is configured to immediately determine that there is the fault related to the reading order of the manuscript P when there is the page(s) in which the page number(s) X is not written in the written page number position ranges R of the image data D, the image reading device 100 erroneously determines that there is the fault related to the reading order of the manuscript P even when reading the manuscript P in the correct order (even when reading the manuscript without multi feed). On this point, according to the first embodiment, the image reading device 100 determines whether or not there is the fault related to the reading order of the manuscript P on the basis of the page number X1, XM, XA, or XB of the image date D excluding the image data D in which the page number is not written, and hence the image reading device 100 can determine that there is no fault related to the reading order of the manuscript P when the page numbers before and after the page(s) containing no page number, such as the picture page(s), are in the correct order even in the case where there is the page(s) containing no page number, such as the picture page(s). Thus, the possibility of erroneously determining that there is the fault related to the reading order of the manuscript P can be significantly reduced.

According to the first embodiment, as hereinabove described, the image reading device 100 is provided with the paper carrying mechanism 11 and the paper carrying drive portion 19 that are configured to carry the manuscript P with the plurality of pages to the reading portion 15 and is configured to determine that there is multi feed during the carrying of the manuscript P by the paper carrying mechanism 11 and the paper carrying drive portion 19 when determining that there is the fault related to the reading order of the manuscript P. Thus, the image reading device 100 can determine that there is multi feed during the carrying of the manuscript P by the paper carrying mechanism 11 and the paper carrying drive portion 19 without providing a detector configured to detect multi feed, such as an ultrasonic sensor, and hence the image reading device 100 can determine that there is multi feed during the carrying of the manuscript P by the paper carrying mechanism 11 and the paper carrying drive portion 19 while suppressing complication of the structure of the scanner 1.

### (Second Embodiment)

The structure of a scanner 201 according to a second embodiment is now described with reference to Figs. 11 to 14 and 19. In the second embodiment, the scanner 201 is configured to perform processing for setting written page number position ranges R and processing for determining multi feed, unlike the first embodiment in which the image reading device 100 is configured to perform the processing for setting the written page number position ranges R and the processing for determining multi feed by the PC controller 21. Portions of the scanner 201 similar to those of the image reading device 100 according to the aforementioned first embodiment are denoted by the same reference numerals, to omit the description. The scanner 201 is an example of the "image reading device" in the claims.

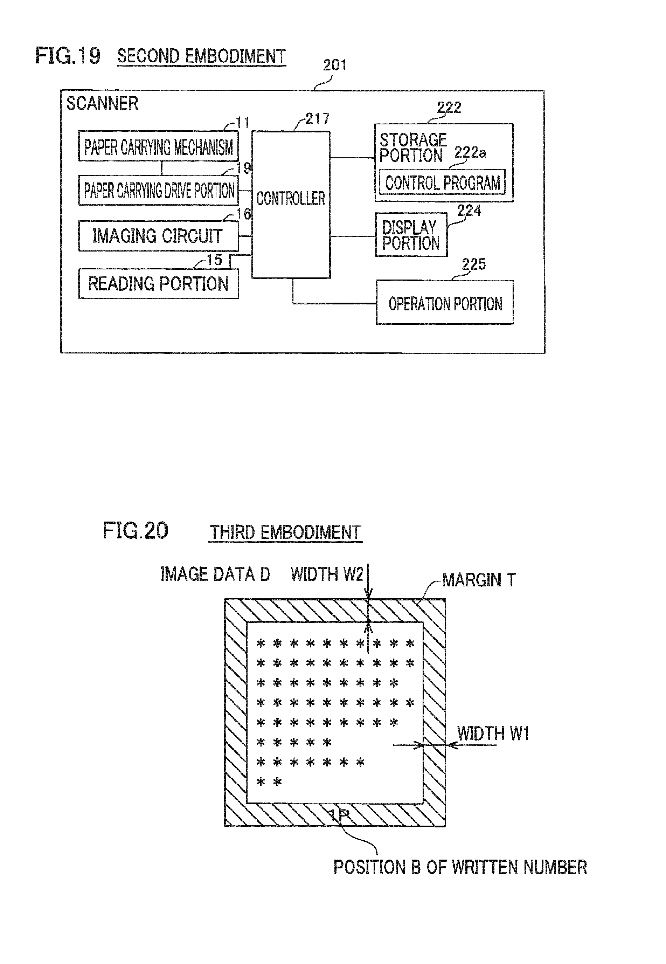

The scanner 201 according to the second embodiment of the present invention is provided with a controller 217, a storage portion 222, a display portion 224, and an operation portion 225, as shown in Fig. 19. The controller 217 has the same function as the PC controller 21 according to the first embodiment by executing a control program 222a stored in the storage portion 222. More specifically, the entire processing for determining multi feed shown in Figs. 15 to 18 is performed by the controller 217 of the scanner 201.

The storage portion 222 is configured to be capable of storing image data D or the like similarly to the storage portion 22 of the PC 2 according to the first embodiment.

The operation portion 225 is configured to be capable of accepting an input operation from a user similarly to the operation portion 25 of the PC 2 according to the first embodiment.

According to the second embodiment, the scanner 201 is configured to display the image data D corresponding to a fault related to the reading order of a manuscript P on the display portion 224 when determining that there is the fault related to the reading order of the manuscript P and to display the last page (image data DM) of the image data D on the display portion 224 when determining that there is no fault related to the reading order of the manuscript P, as shown in Figs. 11 to 14. The display portion 224 is a built-in display portion.

The remaining structure of the scanner 201 according to the second embodiment is similar to that of the scanner 1 according to the first embodiment.

According to the second embodiment, the following effects can be obtained.

According to the second embodiment, as hereinabove described, the scanner 201 is configured to display the image data D corresponding to the fault related to the reading order of the manuscript P on the display portion 224 when determining that there is the fault related to the reading order of the manuscript P and to display the last page (image data DM) of the image data D on the display portion 224 when determining that there is no fault related to the reading order of the manuscript P. Thus, the scanner 201 can allow the user to visually recognize the image data D corresponding to the fault related to the reading order of the manuscript P when determining that there is the fault related to the reading order of the manuscript P (there is multi feed). Furthermore, the scanner 201 can allow the user to visually recognize (confirm) the last page (image data DM) of the image data D when determining that there is no fault related to the reading order of the manuscript P (there is no multi feed).

The remaining effects of the scanner 201 according to the second embodiment are similar to those of the scanner 1 (image reading device 100) according to the first embodiment.

### (Third Embodiment)

The structure of an image reading device 300 according to a third embodiment is now described with reference to Figs. 1 and 20. In the third embodiment, the image reading device 300 is configured to detect a number written in a previously set margin of image data D and the position B of the written number, unlike the first embodiment in which the image reading device 100 is configured to recognize the numbers in the entire areas of the pages of the image data D and to detect the positions B of the written numbers (see Fig. 3). Portions of the image reading device 300 similar to those of the image reading device 100 and the scanner 201 according to the aforementioned first and second embodiments are denoted by the same reference numerals, to omit the description.

The image reading device 300 according to the third embodiment of the present invention is provided with a PC 302, as shown in Fig. 1. The PC 302 includes a PC controller 321 and a control program 322a stored in a storage portion 22.

According to the third embodiment, the PC controller 321 is configured to detect a number written in a previously set margin T of the image data D and the position B of the written number when detecting the number and the position B of the written number from the image data D read by a scanner 1 by executing the control program 322a.

Specifically, the margin T has a constant width W1 from an end of the image data D in a transverse direction and a constant width W2 from an end of the image data D in a longitudinal direction, as shown in Fig. 20. The widths W1 and W2 are preferably set as the maximum value of the width of a margin defined in common word-processing software (WORD (registered trademark) from MICROSOFT CORPORATION or the like), for example. Thus, a page number written in the margin of a commonly prepared document can be recognized. The PC controller 321 is configured to perform processing similarly to the processing performed by the image reading device 100 according to the first embodiment shown in Figs. 15 to 18 on the basis of the number written in the margin T (within a range having the constant width W1 from the end of the image data D in the transverse direction and the constant width W2 from the end of the image data D in the longitudinal direction) and the position B of the written number. The width W1 is an example of the "first width" in the claims. The width W2 is an example of the "second width" in the claims.

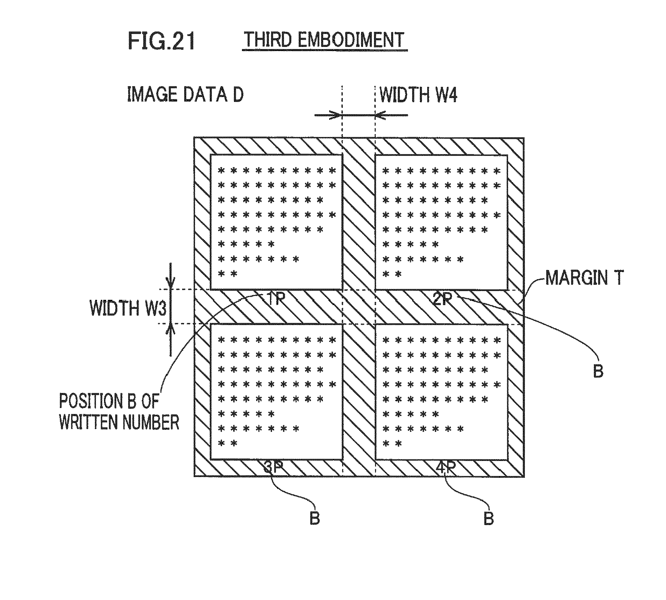

As shown in Fig. 21, the margin T may have a width W3 in a central portion of the image data D in the longitudinal direction and a width W4 in a central portion of the image data D in the transverse direction in addition to the ends of the image data D. When a plurality of (four) pages of a manuscript P are aggregated in one piece of image data D and page numbers X are written in four positions of the image data D, for example, four written page number position ranges R are set in central portions of the margin T. Also in this case, the PC controller 321 is configured to perform the processing similarly to the processing for detecting multi feed performed by the image reading device 100 according to the first embodiment.

The remaining structure of the image reading device 300 according to the third embodiment is similar to that of the image reading device 100 according to the first embodiment.

According to the third embodiment, the following effects can be obtained.

According to the third embodiment, as hereinabove described, the image reading device 300 is configured to detect the number written in the previously set margin T of the image data D and the position B of the written number when detecting the number and the position B of the written number from the image data D read by the scanner 1. Thus, numbers written in an area other than the margin T and the positions B of the written numbers may not be detected, and hence a processing load can be reduced when the number and the position B of the written number are detected from the image data D.

According to the third embodiment, as hereinabove described, the PC controller 321 is configured to determine (set) a written page number position range R within the range (margin T) having the width W1 from the end of the image data D in the transverse direction and the width W2 from the end of the image data D in the longitudinal direction. Thus, a page number X and the position B of a written number may not be acquired in a range that is in excess of the width W1 from the end of the image data D in the transverse direction and a range that is in excess of the width W2 from the end of the image data D in the longitudinal direction, and hence a processing load on the PC controller 321 can be reduced. The remaining effects of the image reading device 300 according to the third embodiment are similar to those of the image reading device 100 according to the first embodiment.

As hereinabove described, an image reading device (100, 201, 300) is configured (an image reading method includes) to acquire first information having regularity contained in image data read by a reading portion (15) and positional information about the first information, to determine a range based on the first information and the positional information, and to detect a read fault of a medium based on the first information contained in the range.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the scanner provided with the paper carrying mechanism and the paper carrying drive portion is employed as the image reading device according to the present invention in each of the aforementioned first to third embodiments, the present invention is not restricted to this. According to the present invention, a scanner provided with no paper carrying portion may alternatively be employed. For example, a so-called flat head scanner or over head scanner can be employed. Also in this case, a fault related to the reading order of a manuscript can be determined (the incorrect order in which a user places papers or the like can be detected) according to the aforementioned structure of the first to third embodiments.

While the written page number position ranges are set on the basis of the positions of the written numbers in all the pieces of image data in the processing for setting the written page number position ranges according to the present invention in each of the aforementioned first to third embodiments, the present invention is not restricted to this. According to the present invention, the written page number position ranges may alternatively be set on the basis of the positions of the written numbers in some pieces of image data.

While the overlapping position meeting the condition of (I (identical number)/(M (total number) - J (number of errors)) ≥ G is set as the written page number position ranges in the processing for setting the written page number position ranges according to the present invention in each of the aforementioned first to third embodiments, the present invention is not restricted to this. According to the present invention, an overlapping position simply meeting the condition of I/M ≥ G may alternatively be set as the written page number position ranges.

While a plurality of roller portions are employed as the paper carrying portion according to the present invention in each of the aforementioned first to third embodiments, the present invention is not restricted to this. According to the present invention, a paper carrying portion other than the roller portions may alternatively be employed as the paper carrying portion. For example, an arm or the like configured to carry papers, such as a so-called page turning device, may be employed.

While the margin is set to have the constant width from the end of the image data in the transverse direction and the constant width from the end of the image data in the longitudinal direction in the aforementioned third embodiment, the present invention is not restricted to this. According to the present invention, the margin may alternatively be set to have a constant width from either the end of the image data in the transverse direction or the end of the image data in the longitudinal direction.

While the processing operations performed by the controller according to the present invention are described, using the flowcharts described in a flow-driven manner in which processing is performed in order along a processing flow for the convenience of illustration in each of the aforementioned first to third embodiments, the present invention is not restricted to this. According to the present invention, the processing operations performed by the controller may alternatively be performed in an event-driven manner in which processing is performed on an event basis. In this case, the processing operations performed by the controller may be performed in a complete event-driven manner or in a combination of an event-driven manner and a flow-driven manner.

While the manuscript is employed as the medium according to the present invention in each of the aforementioned first to third embodiments, the present invention is not restricted to this. According to the present invention, a medium other than the manuscript may alternatively be employed as the medium.

While the numbers having regularity are employed as the first information according to the present invention in each of the aforementioned first to third embodiments, the present invention is not restricted to this. According to the present invention, information other than the numbers having regularity may alternatively be employed as the first information. For example, alphabets or symbols having regularity may be employed as the first information.

While the medium (manuscript) with the three or more pages is read in each of the aforementioned first to third embodiments, the present invention is not restricted to this. Also when a manuscript with two pages is read, the present invention is applicable, and a read fault of the manuscript P can be detected. For example, a PC controller 421 according to a modification shown in Fig. 1 is configured to detect a read fault of a manuscript P when acquiring first information (and positional information) from one (first page) of two pieces of image data D and acquiring no first information from the other (second page) of the two pieces of image data D. More specifically, the PC controller 421 is configured to detect the read fault of the manuscript P, assuming that the second image data D actually exists and the first information is written in the second image data D when acquiring the first information from (a margin T of) the first image data D but not reading the second image data D and terminating carrying of the manuscript P (when the image count number is 1 and a page number of 1 is only acquired). Thus, the PC controller 421 according to the modification is configured to be capable of detecting the read fault of the manuscript P even when reading the manuscript with the two pages.

## Claims

1. An image reading device (100, 201, 300) comprising:
a reading portion (15) configured to read image data of a medium;
a storage portion (22, 222) configured to store the image data; and
a controller (21, 217, 321, 421) configured to acquire first information having regularity contained in the image data and positional information about the first information, both of which are stored in the storage portion, wherein
the controller is configured to determine a range based on the first information and the positional information both acquired from each of two or more pieces of the image data and to detect a read fault of the medium based on the first information contained in the range.

2. The image reading device according to claim 1, wherein
the controller is configured to determine the range based on an overlap of two or more pieces of the positional information.

3. The image reading device according to claim 2, wherein
the controller is configured to determine second information based on a reading order of the image data and to detect the read fault of the medium resulting from multi feed of the medium based on the first information contained in the range and the second information.

4. The image reading device according to claim 3, wherein
the controller is configured to determine a plurality of ranges corresponding to a number of overlapping positions of the positional information when there are a plurality of the overlapping positions.

5. The image reading device according to claim 3, wherein
the controller is configured to determine an overlapping position with a largest number of acquired pieces of first information of a plurality of overlapping positions of the positional information as the range when there are the plurality of overlapping positions.

6. The image reading device according to any of claims 3 to 5, wherein
the controller is configured to determine the range within a range having a first width from an end of the image data in a transverse direction and having a second width from an end of the image data in a longitudinal direction.

7. The image reading device according to any of claims 3 to 6, wherein
the first information contains one of a number, an alphabet, and a symbol having regularity.

8. The image reading device according to any of claims 2 to 7, wherein
the controller is configured to determine the range based on a number of overlaps of the positional information.

9. The image reading device according to any of claims 1 to 8, wherein
the controller is configured to acquire the first information and the positional information from a previously set margin of the image data.

10. The image reading device according to any of claims 1 to 9, wherein
the controller is configured to display the image data corresponding to the read fault of the medium on a display portion (24, 224) when detecting the read fault of the medium and to display a last page of the image data on the display portion when not detecting the read fault of the medium.

11. The image reading device according to any of claims 3 to 7, wherein
the controller is configured to detect the read fault of the medium based on the first information and the second information of the image data excluding the image data in which the first information is not written when the first information is not written in the range.

12. The image reading device according to any of claims 1 to 11, further comprising a paper carrying portion (11, 19) configured to carry the medium including a paper to the reading portion, wherein
the controller is configured to determine that there is multi feed during carrying of the medium by the paper carrying portion when detecting the read fault of the medium based on the first information contained in the range.

13. The image reading device according to any of claims 1 to 12, wherein
the reading portion is configured to read the medium including a manuscript with a plurality of pages as the image data for each page, and
the controller is configured to detect the first information including a number and a position of the number that is written from the image data read by the reading portion.

14. The image reading device according to claim 13, wherein
the controller is configured to set the range including a written page number position range of the image data based on the positional information that is the position of the number that is written in each of at least two of the two or more pieces of the image data and to detect the read fault of the medium based on the number written in the range.

15. An image reading method comprising:
reading image data of a medium;
storing the image data;
acquiring first information having regularity contained in the image data and positional information about the first information, both of which are stored in a storage portion;
determining a range based on two or more pieces of the first information and two or more pieces of the positional information both acquired from each of two or more pieces of the image data; and
detecting a read fault of the medium based on the first information contained in the range.
